# EUROPÄISCHE PATENTSCHRIFT

(11) **EP 1 290 042 B1**
(45) Veröffentlichungstag und Bekanntmachung des Hinweises auf die Patenterteilung: **01.12.2004**
(21) Anmeldenummer: 01940468.0
(22) Anmeldetag: 14.05.2001
(51) Int. Cl.: C08F 10/00, C08F 4/24

(54) **POLYMERISATIONSKATALYSATOR ZUR HERSTELLUNG VON POLYOLEFINEN MIT HERVORRAGENDEN EIGENSCHAFTSKOMBINATIONEN**
POLYMERIZATION CATALYST USED FOR PRODUCING POLYOLEFINS THAT HAVE EXCELLENT COMBINED PROPERTIES
CATALYSEUR DE POLYMERISATION POUR LA PRODUCTION DE POLYOLEFINES PRESENTANT DES COMBINAISONS DE PROPRIETES EXCELLENTES

(30) Priorität: 22.05.2000 DE 10025292
(43) Veröffentlichungstag der Anmeldung: 12.03.2003
(73) Patentinhaber: Basell Polyolefine GmbH, 50389 Wesseling (DE)
(72) Erfinder: MIHAN, Shahram, 67061 Ludwigshafen (DE); LUX, Martin, 67125 Dannstadt-Schauernheim (DE); ROHDE, Wolfgang, 67346 Speyer (DE); DECKERS, Andreas, 55234 Flomborn (DE); KÖLLE, Peter, 67098 Bad Dürkheim (DE); VOGT, Heinz, 67061 Ludwigshafen (DE)
(86) Internationale Anmeldenummer: PCT/EP2001/005452
(87) Internationale Veröffentlichungsnummer: WO 2001/090204

(56) Entgegenhaltungen:
- EP-A- 0 535 516
- EP-A- 0 555 747
- EP-A- 0 589 350
- EP-A- 0 589 472
- DE-A- 2 540 279
- US-A- 3 130 188

## Beschreibung

Die Erfindung betrifft einen Polymerisationskatalysator auf Basis von Kieselgel-geträgerten Chromkatalysatoren.

Polymerisationskatalysatoren, die Kieselgel oder modifiziertes Kieselgel als Trägermaterial und Chrom als aktive Komponente enthalten, spielen eine wesentliche Rolle für die Herstellung von High-Density-Polyethylen (HD-PE). Die Bedingungen bei der Herstellung der Träger und der Katalysatoren bestimmen die chemische Zusammensetzung, Porenstruktur, Teilchengröße und Form der Katalysatoren. Vor der Polymerisation werden die Katalysatoren bei hohen Temperaturen aktiviert, um Chrom auf der Katalysatoroberfläche als Cr(VI)-Spezies zu stabilisieren. Diese Spezies wird durch Zugabe von Ethylen oder von Reduktionsmitteln reduziert, um die katalytisch aktive Spezies auszubilden, die die Polymerisation katalysiert. Die Zusammensetzung des Katalysators, seine Struktur und die Aktivierungsbedingungen haben einen entscheidenden Einfluß auf die Leistung des Katalysators im Polymerisationsverfahren, die Aktivität des Katalysators, die Struktur und die Eigenschaften des entstehenden Polymers.

Trotz intensiver Studien sind die exakten Details, wie diese Katalysatoren die Polymerisationskinetiken und Polymereigenschaften beeinflussen, noch nicht vollständig aufgeklärt. Daher führen kleine Änderungen der Zusammensetzung oder Struktur des Katalysators häufig zu überraschenden Effekten.

US 3,130,188 betrifft einen Kieselgel-geträgerten Chromoxidkatalysator, der, bevor er aktiviert wird, mit anorganischen Fluoriden wie Ammoniumhexafluorosilikat dotiert wird. Dieser Katalysator zeigt eine erhöhte Polymerisationsaktivität und das erhaltene Polyethylen weist eine enge Molekulargewichtsverteilung auf.

EP 0 589 350 beschreibt einen auf einem Xerogel geträgerten Chromkatalysator. Es können bis zu maximal 95 % des im Hydrogel enthaltenen Wassers mit Hilfe eines organischen Lösungsmittels extrahiert werden.
Bei diesem Katalysator wird die Fluorverbindung zusammen mit der Chromverbindung, also in Stufe b) aufgebracht Das resultierende Hydrogel wird in kurzer Zeit in einem Schnelltrockner bei 80 bis 400°C getrocknet,

EP 0 535 516 beschreibt einen auf einem Xerogel geträgerten Chromkatalysator, der, nach dem Auftragen der Chromverbindung, mit einer Fluorverbindung beladen ist.
Es werden jedoch nur maximal 30 % des im Hydrogel enthaltenen Wassers durch Extraktion mit einer organischen Verbindung vor dem Trocknen entfernt.

EP 0 555 747 beschreibt einen mit Fluorverbindungen modifizierten Chromkatalysator auf einem Aluminiumsilikat Träger, der sich von dem anmeldungsgemäß Xerogelträger unterscheidet.

In M. P. McDaniel, Advances in Catalysis, 33, 47 - 98, 1985, wird offenbart, dass Fluor-dotierte Cr(VI)/Kieselgel-Katalysatoren eine erhöhte Aktivität bei niedrigen Kalzinierungstemperaturen aufweisen. Weiterhin wird beschrieben, dass sich die elektronische Umgebung des Chroms wesentlich durch die Fluorid-Dotierung verändert, womit eine unterdrückte Abbruchrate erklärt wird. Die Molekulargewichtsverteilung der erhaltenen Polymere wird zum Teil enger, was auf eine einheitlichere Umgebung des Chroms schließen lässt.

DE-A 25 40 279 betrifft ein Verfahren zur Herstellung eines Katalysators zur Polymerisation von Olefinen auf der Basis von Cr(VI)/Kieselgel, worin das Trägermaterial ein Kieselsäure-Xerogel ist, das auf eine spezielle Weise hergestellt wird. Dieses Xerogel wird mit Chromtrioxid oder einer Chromverbindung, die bei einer anschließenden Aktivierung in Chromtrioxid übergeht, beladen und anschließend in einem wasserfreien, Sauerstoff in einer Konzentration von > 10 Vol.-% enthaltenden Gasstrom bei Temperaturen von 400 bis 1000°C aktiviert.

Die Erfindung geht aus von einem Verfahren zur Herstellung eines Katalysators für die Polymerisation von Olefinen gemäß DE-A 25 40 279, umfassend:
a) Herstellung eines feinteiligen Kieselsäure-Xerogels, durch
   a1) Einsatz eines 10 bis 25 Gew.-% Feststoff (berechnet als SiO₂) enthaltenden teilchenförmigen Kieselsäure-Hydrogels, das weitgehend kugelförmig ist und einen Teilchendurchmesser von 1 bis 8 mm aufweist und erhalten wird durch
      a11) Einbringen einer Natrium- bzw. Kalium-Wasserglaslösung in einen unter Drall stehenden Strom einer wässrigen Mineralsäure, sowohl längs als auch tangential zum Strom,
      a12) tropfenförmiges Versprühen des entstehenden Kieselsäure-Hydrosols in ein gasförmiges Medium,
      a13) Erstarrenlassen des versprühten Hydrosols in dem gasförmigen Medium,
      a14) Befreiung des erhaltenen weitgehend kugelförmigen Partikel des Hydrogels von Salzen ohne vorherige Alterung durch Waschen,
   a2) Extraktion von mindestens 60 % des im Hydrogel enthaltenen Wassers mittels einer organischen Flüssigkeit,
   a3) Trocknung des erhaltenen Gels bis bei 180°C und einem Vakuum von 13 mbar während 30 min. kein Gewichtsverlust mehr auftritt (Xerogel-Bildung),
   a4) Einstellen des Teilchendurchmessers des gewonnenen Xerogels auf 20 bis 2000 µm,
b) Beladen des Xerogels aus einer Lösung von Chromtrioxid oder einer unter den Bedingungen der Stufe c) in Chromtrioxid übergehenden Chromverbindung heraus mit Chrom, und
c) Aktivierung des resultierenden Produkts in einem wasserfreien, Sauerstoff in einer Konzentration von über 10 Vol.-% enthaltenden Gasstrom bei einer Temperatur von 400 bis 1100°C.

Aufgabe der vorliegenden Erfindung ist eine Weiterbildung dieses Verfahrens zur Herstellung eines Katalysators auf der Basis von Cr(VI)/Kieselgel. Der erhaltene Katalysator soll dazu geeignet sein, Polyethylen oder Ethylencopolymere mit einem verbesserten Eigenschaftsprofil bereitzustellen. Insbesondere soll Polyethylen erhalten werden mit einem ausgewogenen Verhältnis von Spannungsrissbeständigkeit zu Schlagzähigkeit.

Diese Aufgabe wird durch das erfindungsgemäße Verfahren gelöst, das dadurch gekennzeichnet ist, dass in Stufe c) zusammen mit der Aktivierung eine Fluorid-Dotierung mit einem Fluorierungsmittel bei einer Temperatur von 400-900°C in Luft durchgeführt wird.

Das erfindungsgemäße Verfahren ermöglicht die Herstellung von Polyolefinen, insbesondere von Polyethylen oder Ethylencopolymeren, mit ausgewogenen Produkteigenschaften. Insbesondere werden Polymere erhalten, die eine hohe Spannungsrissbeständigkeit bei gleichzeitig hoher Schlagzähigkeit aufweisen. Diese Eigenschaften verhalten sich üblicherweise gegensätzlich.

Die Herstellung des Katalysatorträgers und die Aufbringung des Chroms erfolgt, wie in DE-A 25 40 279 beschrieben.

### Stufe a)

Wesentlich für den ersten Schritt der Herstellung des Trägermaterials ist, dass ein Kieselsäure-Hydrogel eingesetzt wird, das einen relativ hohen Feststoffgehalt von 10 bis 25 Gew.-% (berechnet als SiO₂), bevorzugt von 12 bis 20 Gew.-%, besonders bevorzugt 14 bis 20 Gew.-% aufweist und weitgehend kugelförmig ist. Dieses Kieselsäure-Hydrogel wurde auf eine spezielle Weise, die in den Stufen a11) bis a14) beschrieben ist, hergestellt. Die Stufen a11) bis a13) sind in DE-A 21 03 243 näher beschrieben. Stufe a14), das Waschen des Hydrogels, kann beliebig erfolgen, beispielsweise nach dem Gegenstromprinzip mit bis zu 80°C warmem und schwach ammoniakalkalischem (pH-Wert bis etwa 10) Wasser.

Die Extraktion des Wassers aus dem Hydrogel (Stufe a2)) erfolgt vorzugsweise mit einer organischen Flüssigkeit, die besonders bevorzugt mit Wasser mischbar ist, aus der Reihe der C₁- bis C₄-Alkohole und/oder der C₃- bis C₅-Ketone. Besonders bevorzugte Alkohole sind tert.-Butanol, i-Propanol, Ethanol und Methanol. Aus der Reihe der Ketone ist Aceton bevorzugt. Die organische Flüssigkeit kann auch aus Gemischen der oben genannten organischen Flüssigkeiten bestehen, wobei in jedem Fall die organische Flüssigkeit vor der Extraktion weniger als 5 Gew-%, bevorzugt weniger als 3 Gew.-% Wasser enthält. Die Extraktion kann in üblichen Extraktionsvorrichtungen, z.B. Säulenextraktoren, erfolgen.

Die Trocknung (Stufe a3)) erfolgt vorzugsweise bei Temperaturen von 30 bis 140°C, besonders bevorzugt von 80 bis 110°C und bei Drücken von bevorzugt 1,3 mbar bis Atmosphärendruck. Dabei sollte, aus Gründen des Dampfdrucks, einer steigenden Temperatur auch ein steigender Druck und umgekehrt zugeordnet werden.

Das Einstellen des Teilchendurchmessers des gewonnenen Xerogels (Stufe a4)) kann beliebig, z.B. durch Mahlen und Sieben erfolgen.

### Stufe b)

Die Aufbringung des Chromtrioxids auf das Xerogel erfolgt vorzugsweise aus einer 0,05 bis 5 Gew.-%-igen Lösung von Chromtrioxid in einem C₃- bis C₅-Keton oder aus einer 0,05 bis 15 Gew.-%-igen Lösung einer unter den Bedingungen der Stufe c) in Chromtrioxid übergehenden Chromverbindung in einem C₁- bis C₄-Alkohol, wobei das jeweilige Lösungsmittel nicht mehr als 20 Gew.-% Wasser enthalten darf Dabei wird das Xerogel in der Lösung aus der entsprechenden Chromverbindung suspendiert und die flüssigen Bestandteile der Reaktionsmischung werden unter dauernder, möglichst homogener, Durchmischung abgedampft. Dabei sollte die Restfeuchte, worin der Gehalt an organischen Lösungsmitteln eingeschlossen ist, des mit der Chromkomponente beladenen Xerogels nicht mehr als 20 Gew.-% flüchtige Bestandteile, bevorzugt nicht mehr als 10 Gew.-% flüchtige Bestandteile, bezogen auf das Xerogel, betragen.

Geeignete Chromkomponenten sind neben Chromtrioxid und einem Chromhydroxid lösliche Salze des dreiwertigen Chroms mit einer organischen oder anorganischen Säure, wie Acetate, Oxalate, Sulfate, Nitrate. Besonders bevorzugt werden solche Salze eingesetzt, die beim Aktivieren rückstandsfrei in Chrom(VI) übergehen, wie Chrom(III)nitrat-nona-hydrat.

Der in Stufe b) gewonnene Katalysator weist einen Chromgehalt von im allgemeinen 0,05 bis 5 Gew.-%, bevorzugt von 0,1 bis 1,5 Gew.-%, besonders bevorzugt von 0,2 Gew.-% bis 1 Gew.-%, bezogen auf die Gesamtmasse des Katalysators, auf

### Stufe c)

Die Aktivierung des Katalysators kann in üblicher Weise erfolgen, wobei die Bedingungen so gewählt sein sollten, dass das Chrom im fertigen Katalysator im wesentlichen im sechswertigen Zustand (Cr(VI)) vorliegt.

Die Aktivierung erfolgt vorzugsweise in einem wasserfreien Sauerstoff in einer Konzentration von über 10 Vol.-% enthaltenden, Gasstrom, z.B. in Luft, bei einer Temperatur von 400 bis 1100°C, bevorzugt von 500 bis 800°C, besonders bevorzugt von 600 bis 700°C.

### Fluorid-Dotierung

Die Dotierung mit Fluorid erfolgt im Anschluss an die Aufbringung des Chroms während der Aktivierung in Stufe c) des erfindungsgemäßen Verfahrens. Dabei wird die Fluorid-Dotierung besonders bevorzugt zusammen mit der Aktivierung bei Temperaturen von 400 bis 900°C in Luft durchgeführt. Eine geeignete Vorrichtung dazu ist beispielsweise ein Wirbelschichtaktivator.

Als Fluorierungsmittel sind alle üblichen Fluorierungsmittel wie ClF₃, BrF₃, BrF₅, (NH₄)₂SiF₆ (Ammoniumhexafluorosilikat), NH₄BF₄, (NH₄)₂AlF₆, NH₄HF₂, (NH₄)₃PF₆, (NH₄)₂TiF₆ und (NH₄)₂ZrF₆ geeignet. Bevorzugt werden Fluorierungsmittel ausgewählt aus (NH₄)₂SiF₆, NH₄BF₄, (NH₄)₂AlF₆, NH₄HF₂, (NH₄)₃PF₆ eingesetzt. Besonders bevorzugt wird (NH₄)₂SiF₆ eingesetzt.

Das Fluorierungsmittel wird im allgemeinen in einer Menge von 0,5 bis 10 Gew.-%, bevorzugt von 0,5 bis 8 Gew.-%, besonders bevorzugt von 1 bis 5 Gew.-%, ganz besonders bevorzugt von 1 bis 3 Gew.-%, bezogen auf die Gesamtmasse des eingesetzten Katalysators, eingesetzt. In Abhängigkeit von der Fluoridmenge im Katalysator können die Eigenschaften der hergestellten Polymere variiert werden.

Erfindungsgemäß wird weiterhin ein Katalysator für die Polymerisation von Olefinen vorgestellt, erhältlich nach dem erfindungsgemäßen Verfahren sowie ein Verfahren zur Herstellung von Polyolefinen, in dem der erfindungsgemäße Katalysator eingesetzt wird. Dieser Katalysator eignet sich für die Homo- und Copolymerisation von Olefinen, bevorzugt von Ethen und C₃- bis C₈-α-Monoolefinen. Besonders bevorzugt wird der erfindungsgemäße Katalysator in der Polymerisation von Ethen eingesetzt. Die Polymerisation kann in üblicher Weise erfolgen, wobei bevorzugt in Suspension oder Trockenphase polymerisiert wird. Im allgemeinen ist die Mitverwendung von Wasserstoff als Molekulargewichtsregler nicht erforderlich, es können jedoch auch solche Regler in kleinen Mengen mitverwendet werden.

Durch die Verwendung der erfindungsgemäßen Katalysatoren zur Herstellung von Polyolefinen sind Polyolefine zugänglich, die ein ausgewogenes Eigenschaftsprofil besitzen. Insbesondere die Copolymerisation von Ethen mit α-Olefinen unter Verwendung des erfindungsgemäßen Katalysators führt zu Polyethylen mit einer niedrigen Fließrate von 1 bis 100 g/10 min, bevorzugt von 1,5 bis 50 g/10 min, besonders bevorzugt von 2 bis 30 g/10 min. Aufgrund der niedrigen Fließrate sind diese Polyethylene hervorragend verarbeitbar. Dabei läßt sich die Fließrate des gebildeten Polyethylens über den Fluoridgehalt des erfindungsgemäßen Katalysators steuern. Je größer der Fluoridgehalt im Katalysator ist, desto niedriger ist die Fließrate, d.h. die Polymereigenschaften können gesteuert werden.

Auch die anderen Polymereigenschaften werden durch die Dotierung mit Fluorid beeinflußt. So weist das unter Verwendung des erfindungsgemäßen Katalysators erhaltene Polyethylen beispielsweise eine engere Molekulargewichtsverteilung auf, als das mit den entsprechenden nicht dotierten Katalysatoren hergestellte Polyethylen. Trotz der engen Molekulargewichtsverteilung verschlechtern sich die Schwelleigenschaften der mit dem erfindungsgemäßen Katalysator hergestellten Polyolefine nicht. Aus diesen Polyolefinen hergestellte Produkte weisen eine hohe Zeitstandfestigkeit auf. Des weiteren sind sowohl die Schlagzähigkeit als auch die Spannungsrissbeständigkeit trotz der engen Molekulargewichtsverteilung hoch. Das ist überraschend, da gemäß "Polymere Wirkstoffe", Hrsg. H. Batzer, Band III, Seite 70, Tabelle 1.17, Thieme Verlag, Stuttgart, New York, 1984, üblicherweise die Schlagzähigkeit mit einer engen Molmassenverteilung steigt, während die Spannungsrissbeständigkeit mit einer breiteren Molmassenverteilung steigt.

Ein weiterer Gegenstand der vorliegenden Erfindung ist ein Verfahren zur Polymerisation von Olefinen, indem man ein Olefin oder ein Olefingemisch in Gegenwart des erfindungsgemäßen Katalysators polymerisiert.

Das nach dem erfindungsgemäßen Verfahren erhaltene Polyethylen weist eine hohe Spannungsrissbeständigkeit sowie eine hohe Schlagzähigkeit auf, was besonders hervorzuheben ist, da sich diese Eigenschaften üblicherweise gegensätzlich verhalten, d.h., bei Erhöhung der Spannungsrissbeständigkeit sinkt die Schlagzähigkeit und umgekehrt. Das erhaltene Polyethylen eignet sich beispielsweise zur Herstellung von Blasformen wie Kanistern oder anderen Behältern, die mit Lösungsmitteln oder Gefahrstoffen in Berührung kommen. Des weiteren eignet sich das erhaltene Polyethylen unter anderem zur Herstellung von Folien, Rohren, Rohrverkleidungen und IBC.

Die nach dem erfindungsgemäßen Verfahren hergestellten Katalysatoren ermöglichen somit die Herstellung von Polyolefinen, insbesondere von Polyethylen, mit optimierten Produkteigenschaften. Dabei sind insbesondere die niedrige Fließrate und somit gute Verarbeitbarkeit sowie eine hohe Spannungsrissbeständigkeit bei gleichzeitig hoher Schlagzähigkeit zu erwähnen.

Die nachfolgenden Beispiele erläutern die Erfindung zusätzlich.

### Beispiele

### 1. Herstellung des Kieselsäure-Xerogels

Es wird eine in der Figur in DE-A 2 103 243 dargestellte Mischdüse mit folgenden Daten benutzt: Der Durchmesser der zylindrischen, aus einem Kunststoffschlauch gebildeten Mischkammer beträgt 14 mm, die Mischraumlänge (einschließlich Nachmischstrecke) 350 mm. Nahe der stirnseitig verschlossenen Eintrittsseite der Mischkammer ist eine tangentiale Einlaufbohrung von 4 mm Durchmesser für die Mineralsäure angebracht. Es schließen sich vier weitere Bohrungen mit ebenfalls 4 mm Durchmesser und gleicher Einlaufrichtung für die Wasserglaslösung an, wobei der Abstand der Bohrungen voneinander, in Längsrichtung der Mischkammer gemessen, 30 mm beträgt. Für die primäre Mischzone ist demnach das Verhältnis von Länge zu Durchmesser etwa gleich 10:1. Für die sich anschließende sekundäre Mischzone liegt dieses Verhältnis bei 15. Als Spritzmundstück wird ein flachgedrücktes, leicht nierenförmig ausgebildetes Rohrstück über das Austrittsende des Kunststoffschlauches geschoben.

Beschickt wird diese Mischvorrichtung mit 325 l/h 33-gewichtsprozentiger Schwefelsäure von 20°C mit einem Betriebsdruck von ca. 3 bar sowie 1100 l/h Wasserglaslösung (hergestellt aus technischem Wasserglas mit 27 Gew.-% SiO₂ und 8 Gew.-% Na₂O durch Verdünnung mit Wasser) mit einem Litergewicht von 1,20 kg/l und einer Temperatur von ebenfalls 20°C mit einem Druck von ebenfalls ca. 3 bar. In der mit dem Kunststoffschlauch ausgekleideten Mischkammer wird durch fortschreitende Neutralisation ein unbeständiges Hydrosol mit einem pH-Wert zwischen 7 und 8 gebildet, das bis zur vollständigen Homogenisierung noch etwa 0,1 s in der Nachmischzone verbleibt, bevor es durch das Düsenmundstück als fächerförmiger Flüssigkeitsstrahl in die Atmosphäre gespritzt wird. Der Strahl zerteilt sich während des Fluges durch die Luft in einzelne Tropfen, die infolge der Oberflächenspannung in eine weitgehend kugelige Form übergehen und die noch während ihres Fluges innerhalb ca. einer Sekunde zu Hydrogel-Kugeln erstarren. Die Kugeln haben eine glatte Oberfläche, sind glasklar, enthalten etwa 17 Gew.-% SiO₂ und haben folgende Kornverteilung

| | |
|---|---|
| > 8 mm | 10 Gew.-% |
| 6 - 8 mm | 45 Gew.-% |
| 4 - 6 mm | 34 Gew.-% |
| < 4 mm | 11 Gew.-% |

(Die Kornverteilung kann durch Verwendung anderer Düsenmundstücke beliebig variiert werden.)

Die Hydrogel-Kugeln werden am Ende ihres Fluges in einem Waschturm aufgefangen, der nahezu vollständig mit Hydrogel-Kugeln gefüllt ist, und in dem die Kugeln sofort ohne Alterung mit ca. 50°C warmem, schwach ammoniakalischem Wasser in einem kontinuierlich verlaufenden Gegenstromprozeß salzfrei gewaschen werden.

Durch Sieben isoliert man die Kugeln, die einen Durchmesser im Bereich von 2 bis 6 mm haben und füllt 112 kg dieser Kugeln in ein Extraktionsfass mit Zulauf an der Oberseite, einem Siebboden und einem schwanenhalsförmigen Überlauf, welcher an der Fassunterseite angeschlossen ist und den Flüssigkeitsstand im Fass so hoch hält, dass die Hydrogel-Kugeln vollkommen mit Flüssigkeit bedeckt sind. Dann läßt man solange Ethanol mit einer Geschwindigkeit von 60 l/h zulaufen, bis die Dichte des am Überlauf austretenden Ethanol-Wassergemisches bis 0,826 g/cm³ gesunken ist; es sind dann etwa 95 % des in dem Hydrogel enthaltenden Wassers extrahiert.

Die dabei erhaltenen Kugeln werden dann solange getrocknet (12 Stunden bei 120°C unter einem Vakuum von 20 mbar), bis bei 180°C unter einem Vakuum von 13 mbar während 30 Minuten kein Gewichtsverlust mehr auftritt.

Anschließend werden die getrockneten Kugeln gemahlen und durch Sieben die Xerogel-Teile isoliert, die Durchmesser von 40 bis 300 µm haben.

### Aufbringen der aktiven Komponente

Die Xerogel-Teilchen werden mit einer 3,56 gew.-%-igen Chromnitratlösung (Cr(NO₃)₃·9H₂O) in Methanol für 5 Stunden behandelt und unter Vakuum von Methanol befreit, so dass die erhaltene Katalysatorstufe einen Chromgehalt von 1 Gew.-% Cr, bezogen auf die Gesamtmasse enthält.

### Aktivierung und Dotierung

Die Aktivierung erfolgt bei 600 bzw. 650°C mit Luft in einem Wirbelschichtaktivator. Die Fluorid-Dotierung mit 1 Gew.-% bzw. 2 Gew.-% Ammoniumhexafluorosilikat (ASF) (Fluorid-Gehalt, bezogen auf die Gesamtmasse des Katalysators) erfolgt beim Aktivieren. Zur Aktivierung wird die Katalysatorvorstufe innerhalb 1 Stunde auf 350°C aufgeheizt, 1 Stunde bei dieser Temperatur gehalten, anschließend bis auf die gewünschte Aktivierungstemperatur aufgeheizt, 2 Stunden bei dieser Temperatur gehalten und anschließend abgekühlt, wobei bei einer Temperatur von 350°C unter N₂ abgekühlt wird.

Tabelle 1 faßt die hergestellten Katalysatoren (Aktivierungstemperatur, ASF-Dotierung) zusammen:

**Tabelle 1**

| Katalysator | T_{akt.}[°C] | ASF-Dotierung³⁾ | Haltezeit |
|---|---|---|---|
| 1 | 600 | 1 Gew.-% ASF bei Akt.²⁾ | 2h |
| 2 | 600 | 2 Gew.-% ASF bei Akt | 2h |
| 3V¹⁾ | 600 | - | 2h |
| 4 | 650 | 1 Gew.-% ASF bei Akt. | 2h |
| 5 | 650 | 2 Gew.-% ASF bei Akt | 2h |
| 6V¹⁾ | 650 | - | 2h |

| | | | |
|---|---|---|---|
| ¹⁾ Vergleichsversuch | | | |
| ²⁾ Gew.-% ASF, Fluorid-Gehalt in ASF, bezogen auf die Gesamtmenge des Katalysators, die bei der Aktivierung zugegeben werden | | | |
| ³⁾ ASF = Ammoniumhexafluorosilikat | | | |

### Polymerisationsversuche

Die Polymerisationsversuche werden im 0,2 m³-PF(= particle forming loop reactor)-Schleifenreaktor durchgeführt. Die Einstellung der Schmelzfließrate (HLMFR: 8 bis 10 g/10 min) und der Dichte (0,945 bis 0,948 g/cm³) erfolgt über die Hexenkonzentration bzw. Ethenkonzentration im Suspensionsmittel (Isobutan). Alle Katalysatorvarianten werden bei konstanter Reaktortemperatur von 103,8°C polymerisiert. Der Reaktordruck beträgt 39 bar. Der Polymerausstoß liegt zwischen 22 bis 24 kg/h. Für die optimale Durchmischung des Reaktorinhalts wird eine Grasselpumpe mit 2100 Upm betrieben.

Tabelle 2 zeigt die Reaktortemperatur und die Polymeranalyse der im 0,2 m³-Schleifenreaktor mit ASF-modifizierten Katalysatoren hergestellten Chargen und von Vergleichsversuchen (V).

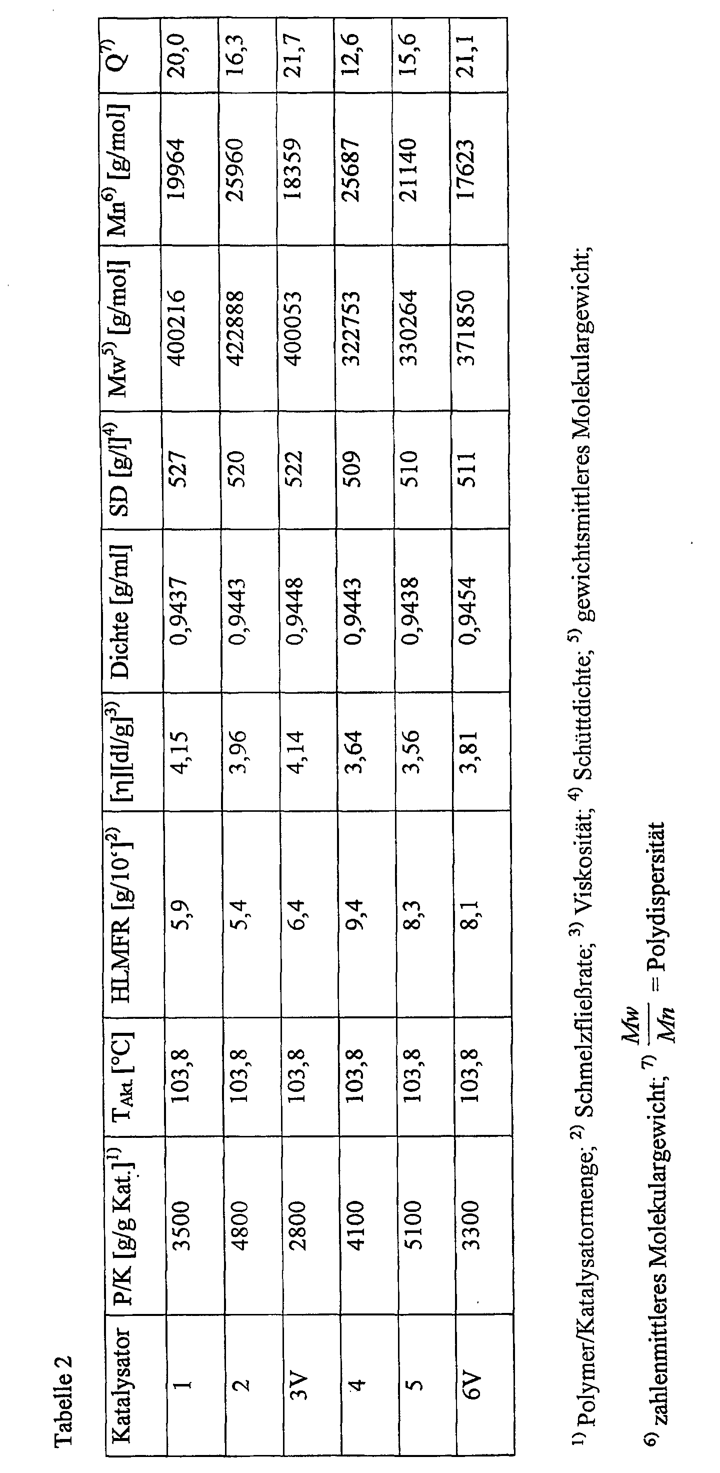

Tabelle 3 zeigt die Kerbschlagzähigkeit (azk) und die Spannungsrissbeständigkeit (ESCR) von Polyethylen, hergestellt mit den erfindungsgemäßen Katalysatoren und mit Vergleichskatalysatoren.

**Tabelle 3**

| Katalysator | ESCR¹⁾/[h] | azk²⁾, 23°C [kJ/m²] | azk²⁾, -30°C [kJ/m²] |
|---|---|---|---|
| 1 | 43³⁾ (>576⁴⁾) | 251 | 177 |
| 2 | 46³⁾ | 276 | 191 |
| 3V | 33³⁾ (>576⁴⁾) | 222 | 147 |
| 5 | 24³⁾ | - | - |
| 6V | 19³⁾ | 195 | 127 |

| | | | |
|---|---|---|---|
| ¹⁾ Spannungsrissbeständigkeit; | | | |
| ²⁾ Kerbschlagzähigkeit; | | | |
| ³⁾ ESCR-Rundscheiben von ZKP/P bei 80°C/3 bar; | | | |
| ⁴⁾ ESCR-Rundscheiben von ZKP/P bei 50°C/3 bar | | | |

Das mit den erfindungsgemäßen Katalysatoren hergestellte Polyethylen zeichnet sich gegenüber dem in Vergleichsversuchen hergestellten Polyethylen insbesondere durch eine hohe Spannungsrissbeständigkeit bei gleichzeitig hoher Kerbschlagzähigkeit aus.

### Prüfmethoden

Die Schmelzfließrate (HLMFR = High Load Melt Flow Rate) wurde nach ISO 1133 bei 190°C unter einer Last von 21,6 kg (190°C/21,6 kg) ermittelt.

Die Dichte [g/cm³] wurde nach ISO 1183 bestimmt.

Der Staudingerindex (η)[dl/g] wurde nach ISO 1628 (bei 130°C, 0,001 g/ml Decalin) ermittelt.

Die Schüttdichte (SD) [g/l] wurde nach DIN 53468 ermittelt.

Die Schlagzähigkeit (azk) [kJ/m²] wurde nach ISO 180/1A ermittelt.

Die Spannungsrißbeständgkeit (ESCR = Environmental Stress Crack Resistance) wurde im Rundscheiben-Bolzentest (RB) nach Elenac CAL entsprechend des im QM-Handbuch von Elenac CAL festgelegten Verfahrens bestimmt. Prüfbedingungen: 50°C bzw. 80°C/3 bar/5 % Lutensol FSA, 10/2 mm Pressplatte (geritzt).

Die Bestimmung der Molmassenverteilungen und der daraus abgeleiteten Mittelwerte Mn, Mw und Mw/Mn erfolgte mittels Hochtemperatur-Gelpermeations-Chromatographie (GPC) in Anlehnung an DIN 55672 unter folgenden Bedingungen: Lösungsmittel: 1,2,4-Trichlorbenzol, Fluß: 1 ml/min, Temperatur: 140°C, Kalibrierung mit PE Standards.

## Patentansprüche

1. Verfahren zur Herstellung eines Katalysators für die Polymerisation von Olefinen, umfassend:
a) Herstellung eines feinteiligen Kieselsäure-Xerogels, durch
a1) Einsatz eines 10 bis 25 Gew.-% Feststoff (berechnet als SiO₂) enthaltenden teilchenförmigen Kieselsäure-Hydrogels, das weitgehend kugelförmig ist und einen Teilchendurchmesser von 1 bis 8 mm aufweist und erhalten wird durch:
a11) Einbringen einer Natrium- bzw. Kalium-Wasserglaslösung in einen unter Drall stehenden Strom einer wässrigen Mineralsäure, sowohl längs als auch tangential zum Strom,
a12) tropfenförmiges Versprühen des entstehenden Kieselsäure-Hydrosols in ein gasförmiges Medium,
a13) Erstarrenlassen des versprühten Hydrosols in dem gasförmigen Medium,
a14) Befreiung des erhaltenen weitgehend kugelförmigen Hydrogels von Salzen ohne vorherige Alterung durch Waschen,
a2) Extraktion von mindestens 60 % des im Hydrogel enthaltenen Wassers mittels einer organischen Flüssigkeit,
a3) Trocknung des erhaltenen Gels, bis bei 180°C und einem Vakuum von 13 mbar während 30 min. kein Gewichtsverlust mehr auftritt (Xerogel-Bildung),
a4) Einstellen des Teilchendurchmessers des gewonnenen Xerogels auf 20 bis 2000 µm,
b) Beladen des Xerogels aus einer Lösung von Chromtrioxid oder einer unter den Bedingungen der Stufe c) in Chromtrioxid übergehenden Chromverbindung heraus mit Chrom, und
c) Aktivierung des resultierenden Produkts in einem wasserfreien, Sauerstoff in einer Konzentration von über 10 Vol.-% enthaltenden Gasstrom bei einer Temperatur von 400 bis 1100°C,
**dadurch gekennzeichnet, dass** in Stufe c) zusammen mit der Aktivierung eine Fluorid-Dotierung mit einem Fluorierungsmittel bei einer Temperatur von 400 bis 900 °C in Luft durchgeführt wird.

2. Verfahren nach Anspruch 1, **dadurch gekennzeichnet, dass** in Stufe a) ein Kieselsäure-Hydrogel mit einem Feststoffgehalt von 12 bis 20 Gew.-% eingesetzt wird.

3. Verfahren nach Anspruch 1 oder 2, **dadurch gekennzeichnet, dass** die Extraktion in Stufe a) mittels einer organischen Flüssigkeit aus der Reihe der C₁- bis C₄-Alkohole und/oder der C₃- bis C₅-Ketone erfolgt.

4. Verfahren nach einem der Ansprüche 1 bis 3, **dadurch gekennzeichnet, dass** die Extraktion in Stufe a) mittels einer organischen Flüssigkeit, die weniger als 3 Gew.-% Wasser enthält, durchgeführt wird.

5. Verfahren nach einem der Ansprüche 1 bis 4, **dadurch gekennzeichnet, dass** die Aufbringung des Chromtrioxids auf das Xerogel in Stufe b) aus einer 0,05 bis 15 Gew.-%-igen Lösung von Chromtrioxid in einem C₃- bis C₅-Keton oder aus einer 0,05 bis 15 Gew.-%-igen Lösung einer unter den Bedingungen der Stufe c) in Chromtrioxid übergehenden Chromverbindung in einem C₁- bis C₄-Alkohol erfolgt, wobei das jeweilige Lösungsmittel nicht mehr als 20 Gew.-% Wasser enthalten darf.

6. Verfahren nach einem der Ansprüche 1 bis 5, **dadurch gekennzeichnet, dass** ein Fluorierungsmittel, ausgewählt aus (NH₄)₂SiF₆, NH₄BF₄, (NH₄)₂AlF₆, (NH₄)₃PF₆ und NH₄HF₂ eingesetzt wird.

7. Verfahren nach einem der Ansprüche 1 bis 6, **dadurch gekennzeichnet, dass** das Fluorierungsmittel in einer Menge von 0,5 bis 10 Gew.-%, bezogen auf die Gesamtmasse des eingesetzten Katalysators, eingesetzt wird.

8. Katalysator für die Polymerisation von Olefinen, erhältlich nach einem Verfahren nach einem der Ansprüche 1 bis 7.

9. Verfahren zur Polymerisation von Olefinen, in dem man ein Olefin oder ein Olefingemisch in Gegenwart eines Katalysators polymerisiert, **dadurch gekennzeichnet, dass** ein Katalysator nach Anspruch 8 eingesetzt wird.

## Claims

1. A process for preparing a catalyst for the polymerization of olefins, which comprises:
a) preparation of a finely divided silica xerogel by
a1) use of a particulate silica hydrogel which contains from 10 to 25% by weight of solid (calculated as SiO₂), is largely spherical and has a particle diameter of from 1 to 8 mm and is obtained by
a11) introduction of a sodium or potassium water glass solution into a rotating stream of an aqueous mineral acid, both longitudinally and tangentially to the stream,
a12) spraying of droplets of the resulting silica hydrosol into a gaseous medium,
a13) allowing the sprayed hydrosol to solidify in the gaseous medium,
a14) freeing the resulting largely spherical hydrogel of salts without prior aging by washing,
a2) extraction of at least 60% of the water present in the hydrogel by means of an organic liquid,
a3) drying of the resulting gel at up to 180°C and a reduced pressure of 13 mbar for 30 minutes until no further weight loss occurs (xerogel formation),
a4) adjustment of the particle diameter of the xerogel obtained to from 20 to 2000 µm,
b) loading of the xerogel with chromium from a solution of chromium trioxide or a chromium compound which is converted into chromium trioxide under the conditions of step c), and
c) activation of the resulting product at from 400 to 1100°C in a water-free gas stream comprising oxygen in a concentration of above 10% by volume,
**characterized in that** a fluoride doping with a fluorinating agent is carried out together with the activation in step c) at from 400 to 900°C in air.

2. The process as claimed in claim 1, **characterized in that** a silica hydrogel having a solids content of from 12 to 20% by weight is used in step a).

3. The process as claimed in claim 1 or 2, **characterized in that** the extraction in step a) is carried out by means of an organic liquid selected from the group consisting of C₁-C₄-alcohols and C₃-C₅-ketones.

4. The process as claimed in any of claims 1 to 3, **characterized in that** the extraction in step a) is carried out by means of an organic liquid containing less than 3% by weight of water.

5. The process as claimed in any of claims 1 to 4, **characterized in that** the application of the chromium trioxide to the xerogel in step b) is carried out from a 0.05-15% strength by weight solution of chromium trioxide in a C₃-C₅-ketone or from a 0.05-15% strength by weight solution of a chromium compound which is converted into chromium trioxide under the conditions of step c) in a C₁-C₄-alcohol, where the respective solvent must contain no more than 20% by weight of water.

6. The process as claimed in any of claims 1 to 5, **characterized in that** a fluorinating agent selected from among (NH₄)₂SiF₆, NH₄BF₄, (NH₄)₂AlF₆, (NH₄)₃PF₆ and NH₄HF₂ is used.

7. The process as claimed in any of claims 1 to 6, **characterized in that** the fluorinating agent is used in an amount of from 0.5 to 10% by weight, based on the total mass of the catalyst.

8. A catalyst for the polymerization of olefins which is obtainable by a process as claimed in any of claims 1 to 7.

9. A process for the polymerization of olefins, in which an olefin or an olefin mixture is polymerized in the presence of a catalyst, **characterized in that** a catalyst as claimed in claim 8 is used.

## Revendications

1. Procédé pour la préparation d'un catalyseur pour la polymérisation d'oléfines, comprenant :
a) la préparation d'un xérogel d'acide silicique finement divisé
a1) en utilisant un hydrogel d'acide silicique particulaire, présentant une teneur de 10 à 25 % en masse en une matière solide (calculé sous forme de SiO₂), qui est essentiellement sphérique et présente un diamètre de particules de 1 à 8 mm, et que l'on obtient par :
a11) introduction d'une solution de silicate de sodium ou de silicate de potassium dans un courant tourbillonnant d'un acide minéral aqueux, aussi bien dans le sens longitudinal que dans le sens tangentiel par rapport au courant,
a12) pulvérisation sous forme de gouttelettes de l'hydrosol d'acide silicique formé dans un milieu gazeux,
a13) solidification de l'hydrosol pulvérisé dans un milieu gazeux,
a14) élimination de sels à partir de l'hydrogel essentiellement sphérique obtenu, sans vieillissement préalable, par lavage,
a2) extraction d'au moins 60 % de l'eau contenue dans l'hydrogel à l'aide d'un liquide organique,
a3) séchage du gel obtenu, à une température jusqu'à 180°C et sous un vide de 13 mbar, pendant 30 minutes, jusqu'à l'arrêt de la perte de poids (formation de xérogel),
a4) ajustement du diamètre des particules du xérogel obtenu à une taille de 20 à 2000 µm,
b) chargement du xérogel de chrome à partir d'une solution de trioxyde de chrome ou d'un composé de chrome qui est converti en trioxyde de chrome dans les conditions de l'étape c), et
c) activation du produit résultant dans un courant de gaz anhydre, présentant une concentration en oxygène supérieure à 10 % vol., à une température de 400 à 1100°C,
**caractérisé en ce qu'**on réalise à l'étape c) conjointement avec l'activation un dopage au fluor à l'aide d'un agent de fluoration à l'air à une température de 400 à 900°C.

2. Procédé selon la revendication 1, **caractérisé en ce qu'**on utilise à l'étape a) un hydrogel d'acide silicique ayant une teneur en matières solides de 12 à 20 % en masse.

3. Procédé selon la revendication 1 ou 2, **caractérisé en ce qu'**on réalise l'extraction à l'étape a) par un liquide organique pris dans la gamme des alcools en C₁ à C₄ et/ou des cétones en C₃ à C₅.

4. Procédé selon l'une des revendications 1 à 3, **caractérisé en ce qu'**on réalise l'extraction à l'étape a) par un liquide organique qui présente une teneur en eau inférieure à 3 % en masse.

5. Procédé selon l'une des revendications 1 à 4, **caractérisé en ce que** le dépôt du trioxyde de chrome sur le xérogel à l'étape b) est réalisé à partir d'une solution renfermant de 0,05 à 15 % de trioxyde de chrome dans une cétone en C₃ à C₅, ou à partir d'une solution renfermant de 0,05 à 15 % en masse d'un composé de chrome qui se convertit en trioxyde de chrome dans les conditions de l'étape c) dans un alcool en C₁ à C₄, le solvant respectif ne devant pas présenter une teneur en eau supérieure à 20 %.

6. Procédé selon l'une des revendications 1 à 5, **caractérisé en ce qu'**on utilise un agent de fluoration pris parmi (NH₄)₂SiF₆, NH₄BF₄, (NH₄)₂AlF₆, (NH₄)₃PF₆ et NH₄HF₂.

7. Procédé selon l'une des revendications 1 à 6, **caractérisé en ce qu'**on utilise l'agent de fluoration en une quantité de 0,5 à 10 % en masse, par rapport au poids total du catalyseur utilisé.

8. Catalyseur pour la polymérisation d'oléfines que l'on peut obtenir selon un procédé selon l'une des revendications 1 à 7.

9. Procédé pour la polymérisation d'oléfines, dans lequel on polymérise une oléfine ou un mélange d'oléfines en présence d'un catalyseur, **caractérisé en ce qu'**on utilise un catalyseur selon la revendication 8.
